(19) 

**Europäisches Patentamt**
**European Patent Office**
**Office européen des brevets**

(11)  **EP 2 952 980 A1**

(12)  **EUROPEAN PATENT APPLICATION**
published in accordance with Art. 153(4) EPC

(43)  Date of publication:
**09.12.2015 Bulletin 2015/50**

(21)  Application number: **13874187.1**

(22)  Date of filing: **31.01.2013**

(51)  Int Cl.:
***G05B 11/36*** (2006.01)

(86)  International application number:
**PCT/CN2013/071220**

(87)  International publication number:
**WO 2014/117371 (07.08.2014 Gazette 2014/32)**

(84)  Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**

(71)  Applicant: **Siemens Aktiengesellschaft**
**80333 München (DE)**

(72)  Inventors:
• **FAN, Shunjie**
**Beijing 100096 (CN)**

• **MENG, Xiantao**
**Hebei Province**
**065000 Langfang (CN)**
• **HU, Yongqiang**
**Tiexi District**
**110020 Shenyang (CN)**

(74)  Representative: **Isarpatent**
**Patentanwälte Behnisch Barth Charles**
**Hassa Peckmann & Partner mbB**
**Friedrichstrasse 31**
**80801 München (DE)**

(54)  **PROCESS CONTROL METHOD, DEVICE, AND SYSTEM**

(57)    Disclosed are a process control method, device, and system. The system comprises: a wireless sensor, used for collecting a process parameter of a production process according to a sampling frequency, acquiring a control amount modified value according to the collected process parameter in a data collecting period, and sending the collected process parameter and the calculated control amount modified value to a controller according to a transmission frequency, wherein the sampling frequency is higher than the transmission frequency; and the controller, used for calculating a control variable initial value according to the process parameter sent by the wireless sensor, acquiring a control variable value according to the control variable initial value and the control amount modified value which is sent by the wireless sensor, and controlling the production process by using the control variable value. By applying the embodiments of the present invention, a good balance is achieved between the power consumption of the wireless sensor and the control performance of the controller; therefore, the power consumption of the wireless sensor can be reduced by using a low transmission frequency, and multiple measured values that are collected between data transmission processes of the wireless sensor can be fully used to improve the control performance of the controller.

Fig. 2

**Description**

Technical field

The present invention relates to the field of control technology, in particular to a process control method, device and system.

Background art

In recent years, wireless technology has become ever more important in the process control field due to its unique advantages. Industrial process control systems form an important part of the control field, and their characteristics such as high field signal discreteness and large system delay are extremely well suited to being combined with wireless technology. In fields such as industrial automation and building automation, the use of wireless sensors in process control has gradually developed into an industry trend. As many companies develop large numbers of wireless process tools suitable for the wireless HART and ISA-100 standards, this trend is being further manifested.

The advantages of using wireless sensors in process control are obvious in this field. For example, fast installation, savings in terms of wiring costs (up to 40 USD per foot of cable), etc. Moreover, application scenarios such as pharmaceutical processing, petrochemical processing, algaculture processing and indoor temperature control are all exemplary applications of wireless sensors in process control.

Wireless sensors are generally powered by a battery with a limited service life. Depending on the sensor operating conditions, the battery life is usually a few months or several years. The process of communication between a wireless sensor and a process control system consumes most of the power. Thus, by adopting a longer communication interval, the battery service life can be maximized, and the amount of sensor overhaul and servicing work can be reduced. In a Siemens wireless temperature transmitter (SITRANS TF280 wireless HART) powered by a battery, the transmission rate can be adjusted between 8 seconds and 255 seconds, with the factory setting being 60 seconds.

However, a longer transmission interval means that the control loop is not optimized, and is likely to oscillate. When a switch is made from a wired sensor to a wireless sensor, or the transmission interval is changed, a properly adjusted PI controller may need to be re-adjusted.

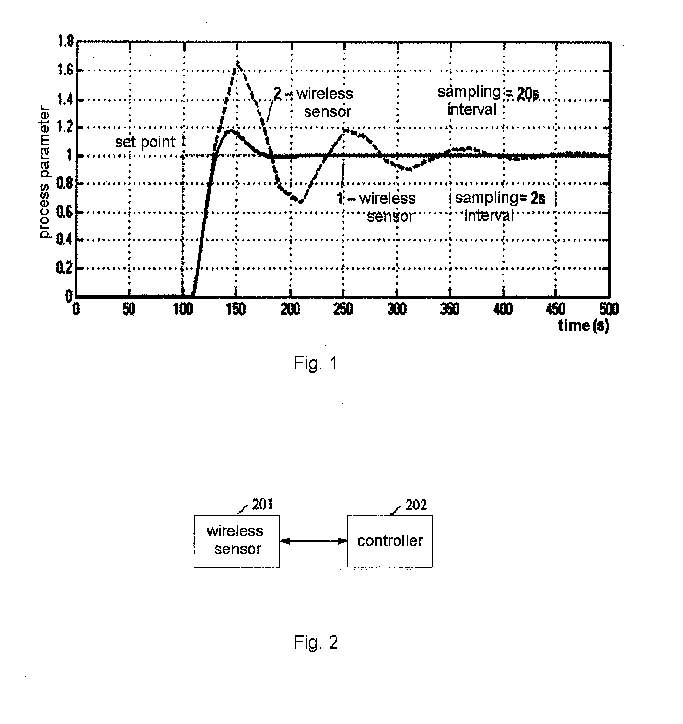

Fig. 1 is a schematic diagram comparing the control performances of two wireless transmission intervals according to the prior art. Refer to Fig. 1; in Fig. 1 the control performances of two wireless transmission intervals are compared. For a set value change at 100 seconds, the control parameter (process variable) output of the same PI controller is shown by the dotted line. If the transmission interval is 2 seconds, the process shows good control performance (curve 1). If the user tries increasing the transmission interval to 20 seconds in order to improve the battery service life (curve 2), the control performance suffers as large overswings occur and the transition time increases.

Most wireless sensor workflows comprise: giving a measurement value, sending the measurement value to a control system, entering a sleep mode to save energy. In the prior art, multiple measurement values can be acquired between wireless sensor data transmission processes in order to improve process control robustness, but such data cannot be utilized effectively to improve control performance. For example, even though the average value of a process variable will be sent to the control system in the prior art, the values of multiple measurements between wireless sensor transmission processes are not utilized effectively.

Content of the invention

The embodiments of the present invention propose a process control system, to improve control peformance.
The embodiments of the present invention propose a process control method, to improve control peformance.
The embodiments of the present invention propose a wireless sensor, to improve control peformance.
The embodiments of the present invention propose a controller, to improve control peformance.
The technical solution of the embodiments of the present invention comprises:

A process control system, comprising a wireless sensor and a controller, wherein:

the wireless sensor is used for collecting process parameters of a production process according to a sampling frequency, obtaining a control quantity correction value according to process parameters collected in a data collection period, and sending the collected process parameters and the calculated control quantity correction value to the controller according to a transmission frequency, wherein the sampling frequency is higher than the transmission frequency;

the controller is used for calculating a control variable initial value according to the process parameters sent by the wireless sensor, and obtaining a control variable value according to the control variable initial value and the control quantity correction value sent by the wireless sensor, and

using the control variable value to control the production process.

The wireless sensor is used for sending a process parameter collected at a transmission moment and the calculated control quantity correction value to the controller according to the transmission frequency, or sending an average value of process parameters collected in a data transmission period and the calculated control quantity correction value to the controller according to the transmission frequency.

The wireless sensor is used for subtracting a process parameter sent in the previous data transmission period from each process parameter collected in the data collection period, then summing the difference values to obtain the control quantity correction value.

A process control system, comprising a wireless sensor and a controller, wherein:

the wireless sensor is used for collecting process parameters of a production process according to a sampling frequency, and sending the collected process parameters to the controller according to a transmission frequency, wherein the sampling frequency is higher than the transmission frequency;

the controller is used for obtaining a control quantity correction value according to process parameters collected by the wireless sensor in a data collection period, calculating a control variable initial value according to the process parameters sent by the wireless sensor, and obtaining a control variable value according to the control variable initial value and the control quantity correction value, and using the control variable value to control the production process.

The controller is used for calculating the control variable initial value according to a process parameter collected by the wireless sensor at a transmission moment, or calculating the control variable initial value according to an average value of process parameters collected by the wireless sensor in a data transmission period.

The controller is used for subtracting a process parameter sent in the previous data transmission period from each process parameter collected by the wireless sensor in the data collection period, then summing the difference values to obtain the control quantity correction value.

A process control method, comprising:

collecting process parameters of a production process according to a sampling frequency, obtaining a control quantity correction value according to process parameters collected in a data collection period, and sending the collected process parameters and the calculated control quantity correction value wirelessly according to a transmission frequency, wherein the sampling frequency is higher than the transmission frequency;

calculating a control variable initial value according to the wirelessly received process parameters, and obtaining a control variable value according to the control variable initial value and the wirelessly received control quantity correction value, and using the control variable value to control the production process.

The step of sending the collected process parameters and the calculated control quantity correction value wirelessly according to a transmission frequency comprises:

sending a process parameter collected at a transmission moment and a calculated control quantity correction value wirelessly according to the transmission frequency; or sending an average value of process parameters collected in a data transmission period and the calculated control quantity correction value wirelessly according to the transmission frequency.

The step of obtaining a control quantity correction value according to process parameters collected in a data collection period comprises:

subtracting a process parameter sent in the previous data transmission period from each process parameter collected in the data collection period, then summing the difference values to obtain the control quantity correction value.

A process control method, comprising:

collecting process parameters of a production process according to a sampling frequency, and sending the collected process parameters wirelessly according to a transmission frequency, wherein the sampling frequency is higher than the transmission frequency;

extracting, from the wirelessly received process parameters, process parameters which are included in a data collection period, using the process parameters which are included in the data collection period to obtain a control quantity correction value, calculating a control variable initial value according to the wirelessly received process parameters, and obtaining a control variable value according to the control variable initial value and the control quantity correction value, and using the control variable value to control the production process.

The step of calculating a control variable initial value according to the wirelessly received process parameters comprises: using a process parameter collected at a transmission moment to calculate the control variable initial value, or using an average value of process parameters collected in a data transmission period to calculate the control variable initial value.

The step of using the process parameters which are included in the data collection period to obtain a control quantity correction value comprises:

subtracting a process parameter sent in the previous data transmission period from each process parameter collected in the data collection period, then summing the difference values to obtain the control quantity correction value.

A wireless sensor, comprising a process parameter collecting unit, a control quantity correction value obtaining unit and a wireless transmission unit, wherein:

the process parameter collecting unit is for collecting process parameters according to a sampling frequency;

the control quantity correction value obtaining unit is for obtaining a control quantity correction value according to process parameters collected in a data collection period;

the wireless transmission unit is for sending the collected process parameters and the calculated control quantity correction value to a controller according to a transmission frequency;

wherein the sampling frequency is higher than the transmission frequency.

The control quantity correction value obtaining unit comprises a comparator, a summator and an aggregator.
The wireless transmission unit is for sending a process parameter collected at a transmission moment and the calculated control quantity correction value to the controller according to the transmission frequency, or sending an average value of process parameters collected in a data transmission period and the calculated control quantity correction value to the controller according to the transmission frequency.
The control quantity correction value obtaining unit is for subtracting a process parameter sent in the previous data transmission period from each process parameter collected in the data collection period, then summing the difference values to obtain the control quantity correction value.
A controller, comprising a wireless transmission unit, a control quantity correction value obtaining unit and a control variable value obtaining unit, wherein:

the wireless transmission unit is for obtaining process parameters of a production process that are collected by a wireless sensor according to a sampling frequency and sent according to a transmission frequency, wherein the sampling frequency is higher than the transmission frequency; the control quantity correction value obtaining unit is for obtaining a control quantity correction value according to process parameters collected by the wireless sensor in a data collection period;

the control variable value obtaining unit is for calculating a control variable initial value according to process parameters sent by the wireless sensor, and obtaining a control variable value according to the control variable initial value and the control quantity correction value, and using the control variable value to control the production process.

The control variable value obtaining unit is for calculating the control variable initial value according to a process parameter collected by the wireless sensor at a transmission moment, or calculating the control variable initial value according to an average value of process parameters collected by the wireless sensor in a data transmission period.
The control quantity correction value obtaining unit is for subtracting a process parameter sent in the previous data transmission period from each process parameter collected by the wireless sensor in the data collection period, then summing the difference values to obtain the control quantity correction value.

A machine-readable storage medium, which stores instructions for making a machine execute any of the above methods.

A computer program, which makes a machine execute any of the above methods when the computer program is run in the machine.

It can be seen from the above technical solution that the embodiments of the present invention comprise a wireless sensor and a controller, wherein: the wireless sensor is used for collecting process parameters of a production process according to a sampling frequency, obtaining a control quantity correction value according to process parameters collected in a data collection period, and sending the collected process parameters and the calculated control quantity correction value to the controller according to a transmission frequency, wherein the sampling frequency is higher than the transmission frequency; the controller is used for calculating a control variable initial value according to the process parameters sent by the wireless sensor, obtaining a control variable value according to the control variable initial value and the control quantity correction value sent by the wireless sensor, and using the control variable value to control the production process. Clearly, when the embodiments of the present invention are applied, a good compromise is achieved between wireless sensor energy consumption and controller control performance; on the one hand, a slower transmission frequency can be used to reduce the wireless sensor energy consumption, and on the other hand, multiple measurement values collected between wireless sensor data transmission processes are fully utilized to improve the control performance of the controller.

Description of the accompanying drawings

Fig. 1 is a schematic diagram comparing the control performances of two wireless transmission intervals according to the prior art;

Fig. 2 is a structural diagram of a process control system in an embodiment of the present invention;

Fig. 3 is a first flow chart of a process control method in an embodiment of the present invention;

Fig. 4 is a second flow chart of a process control method in an embodiment of the present invention;

Fig. 5 is a structural diagram of a wireless sensor in an embodiment of the present invention;

Fig. 6 is a structural diagram of a controller in an embodiment of the present invention;

Fig. 7 is a detailed structural diagram of a process control system in an embodiment of the present invention;

Fig. 8 is a schematic diagram comparing the control performances of an embodiment of the present invention with the prior art;

Fig. 9 is a schematic diagram showing the improvement in control performance in an embodiment of the present invention.

Particular embodiments

The present invention is explained in further detail below in conjunction with the accompanying drawings and embodiments, to clarify the technical solution and advantages thereof. It should be understood that the particular embodiments described here are merely intended to explain the present invention elaboratively, not to define the scope of protection thereof.

In an embodiment of the present invention, a good compromise is achieved between wireless sensor energy consumption and controller control performance; on the one hand, a slower transmission frequency can be used to reduce the wireless sensor energy consumption, and on the other hand, multiple measurement values collected between wireless sensor data transmission processes are fully utilized to improve the control performance of the controller.

Fig. 2 is a structural diagram of a process control system in an embodiment of the present invention.

As Fig. 2 shows, the process control system comprises a wireless sensor 201 and a controller 202.

The wireless sensor 201 is used for collecting process parameters of a production process according to a sampling frequency, obtaining a control quantity correction value according to process parameters collected in a data collection period, and sending the collected process parameters and the calculated control quantity correction value to the controller 202 according to a transmission frequency, wherein the sampling frequency is higher than the transmission frequency;

the controller 202 is used for calculating a control variable initial value according to the process parameters sent by the wireless sensor 201, and obtaining a control variable value according to the control variable initial value and the control quantity correction value sent by the wireless sensor 201, and using the control variable value to control the production process.

In one embodiment, the wireless sensor 201 may send a process parameter collected at a transmission moment and the calculated control quantity correction value to the controller 202 according to the transmission frequency, or send an average value of process parameters collected in a data transmission period and the calculated control quantity correction value to the controller 202 according to the transmission frequency.

In one embodiment, the wireless sensor 201 may subtract a process parameter sent in the previous data transmission period from each process parameter collected in the data collection period, then sum the difference values to obtain the control quantity correction value.

In the above examples, exemplary scenarios for the calculation of the control quantity correction value by the wireless sensor 201 are specifically described. In fact, in the embodiments of the present invention, the control quantity correction value may be calculated not by the wireless sensor 201 but instead by the controller 202.

When the control quantity correction value is calculated by the controller 202:

the wireless sensor 201 is used for collecting process parameters of a production process according to a sampling frequency, and sending the collected process parameters to the controller according to a transmission frequency, wherein the sampling frequency is higher than the transmission frequency;

the controller 202 is used for obtaining a control quantity correction value according to process parameters collected by the wireless sensor in a data collection period, calculating a control variable initial value according to the process parameters sent by the wireless sensor, and obtaining a control variable value according to the control variable initial value and the control quantity correction value, and using the control variable value to control the production process.

Similarly, the controller 202 may calculate the control variable initial value according to a process parameter collected by the wireless sensor 201 at a transmission moment, or calculate the control variable initial value according to an average value of process parameters collected by the wireless sensor in a data transmission period.

Similarly, the controller 202 may subtract a process parameter sent in the previous data transmission period from each process parameter collected by the wireless sensor 201 in the data collection period, then sum the difference values to obtain the control quantity correction value.

Those skilled in the art will realize that communication between the wireless sensor 201 and controller 202 may be implemented in a number of ways, including but not limited to: cellular connection, infrared connection, bluetooth connection, wireless local area network (LAN) or wireless wide area network (WAN), etc.

Moreover, those skilled in the art will realize that the production processes for which the embodiments of the present invention are suitable may be any production processes in fields such as industrial automation, building automation and culture automation, including but not limited to: microalgal culture control, temperature control, pressure control, flow control, liquid level control and constituent control, etc.

Based on the above description, the embodiments of the present invention also propose a process control method.

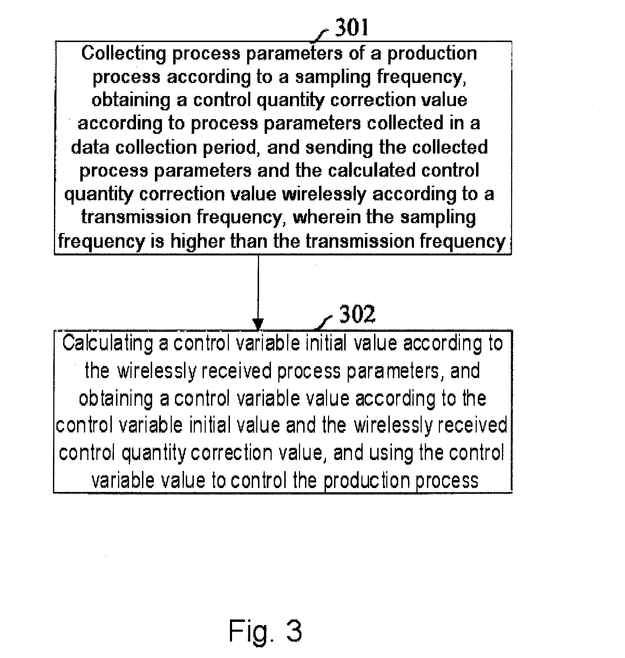

Fig. 3 is a first flow chart of a process control method in an embodiment of the present invention. As Fig. 3 shows, the method comprises:

Step 301: collecting process parameters of a production process according to a sampling frequency, obtaining a control quantity correction value according to process parameters collected in a data collection period, and sending the collected process parameters and the calculated control quantity correction value wirelessly according to a transmission frequency, wherein the sampling frequency is higher than the transmission frequency.

Here, the process parameters of the production process can be collected by the sensor. The sensor is a detection device, which can sense information measured in the production process, and can convert sensed information according to a given rule into electrical signals or another required form of information for output, to meet the requirements for information transmission, processing, storage, display, recording and control, etc. For example: the sensor may specifically be a pressure-sensitive or force-sensitive sensor, position sensor, liquid level sensor, energy consumption sensor, speed sensor, acceleration sensor, ray radiation sensor, heat-sensitive sensor, etc.

In an embodiment of the present invention, a large number of sensor nodes can be randomly deployed inside or close to a production process monitoring zone, to form a network by self-organization. Data monitored by a sensor node is transmitted in jumps along other sensor nodes; monitored data may be processed by multiple nodes in the course of transmission, after multiple jumps is routed to a convergence node, and finally reaches a management node via internet or satellite. A user configures and manages the sensor network via the management node, issues monitoring tasks and collects monitored data.

In an embodiment of the present invention, the wireless sensor is used to collect and send process parameters of the production process. Component modules of the wireless sensor may be encapsulated in one housing, which during operation will be powered by a battery or a vibration-powered generator, and forms a wireless sensor network node; a network is formed by self-organization from randomly distributed micro-nodes which integrate a sensor, a data processing unit and a communication module. The wireless sensors can collect digital or analog signals from equipment, and transmit these via the wireless sensor network to a wireless gateway of a monitoring center, where they are fed into a computer directly to be analyzed.

Step 302: calculating a control variable initial value according to the wirelessly received process parameters, and obtaining a control variable value according to the control variable initial value and the wirelessly received control quantity correction value, and using the control variable value to control the production process.

Here, the controller side receives process parameters wirelessly, calculates a control variable initial value according to the process parameters, and obtains a control variable value according to the control variable initial value and the wirelessly received control quantity correction value, then uses the control variable value to control the production process.

In step 301, the step of sending the collected process parameters and the calculated control quantity correction value wirelessly according to a transmission frequency comprises: sending a process parameter collected at a transmission moment and a calculated control quantity correction value wirelessly according to the transmission frequency; or sending an average value of process parameters collected in a data transmission period and the calculated control quantity correction value wirelessly according to the transmission frequency.

In step 301, the step of obtaining a control quantity correction value according to process parameters collected in a data collection period may specifically comprise: subtracting a process parameter sent in the previous data transmission period from each process parameter collected in the data collection period, then summing the difference values to obtain the control quantity correction value.

In the above flow, the control quantity correction value is calculated by the wireless sensor side. In fact, in the embodiments of the present invention, the control quantity correction value may be calculated not by the wireless sensor side but instead by the controller side.

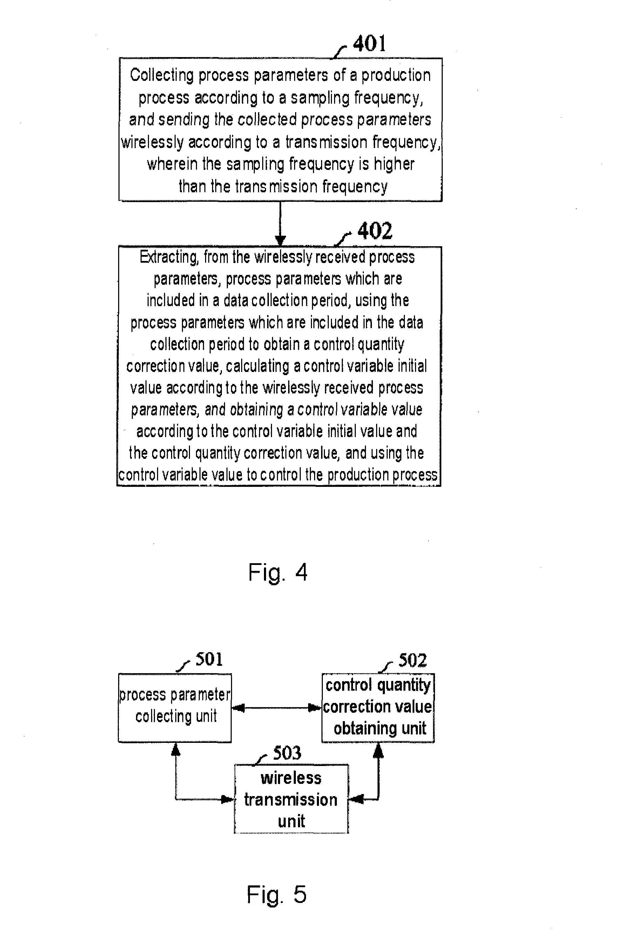

Fig. 4 is a second flow chart of the process control method in an embodiment of the present invention.

As Fig. 4 shows, the method comprises:

Step 401: collecting process parameters of a production process according to a sampling frequency, and sending the collected process parameters wirelessly according to a transmission frequency, wherein the sampling frequency is higher than the transmission frequency;

Step 402: extracting, from the wirelessly received process parameters, process parameters which are included in a data collection period, using the process parameters which are included in the data collection period to obtain a control quantity correction value, calculating a control variable initial value according to the wirelessly received process parameters, and obtaining a control variable value according to the control variable initial value and the control quantity correction value, and using the control variable value to control the production process.

In step 402, the step of calculating a control variable initial value according to the wirelessly received process parameters may specifically comprise:

using a process parameter collected at a transmission moment to calculate the control variable initial value, or using an average value of process parameters collected in a data transmission period to calculate the control variable initial value.

In step 402, the step of using the process parameters which are included in the data collection period to obtain a control quantity correction value may specifically comprise:

subtracting a process parameter sent in the previous data transmission period from each process parameter collected in the data collection period, then summing the difference values to obtain the control quantity correction value.

In the above flow, the specific way in which process parameters that are included in the data collection period are used to obtain the control quantity correction value is described in detail, but those skilled in the art will realize that the embodiments of the present invention are not limited to this. Based on the above detailed analysis, the embodiments of the present invention also propose a wireless sensor.

Fig. 5 is a structural diagram of a wireless sensor in an embodiment of the present invention.

As Fig. 5 shows, the wireless sensor comprises a process parameter collecting unit 501, a control quantity correction value obtaining unit 502 and a wireless transmission unit 503, wherein:

the process parameter collecting unit 501 is for collecting process parameters according to a sampling frequency;

the control quantity correction value obtaining unit 502 is for obtaining a control quantity correction value according to process parameters collected in a data collection period;

the wireless transmission unit 503 is for sending the collected process parameters and the calculated control quantity correction value to a controller according to a transmission frequency;

wherein the sampling frequency is higher than the transmission frequency.

In one embodiment, the control quantity correction value obtaining unit 502 is for subtracting a process parameter sent in the previous data transmission period from each process parameter collected in the data collection period, then summing the difference values to obtain the control quantity correction value.

In one embodiment, the control quantity correction value obtaining unit 502 specifically comprises electronic components including a comparator, a summator and an aggregator, and is integrated into a whole by the logic functions between these electronic components. Those skilled in the art will realize that the control quantity correction value obtaining unit may be formed from electronic components such as a comparator, summator and aggregator by a variety of implementation methods; the embodiments of the present invention impose no restrictions in this respect.

In one embodiment, the wireless transmission unit 503 is for sending a process parameter collected at a transmission moment and the calculated control quantity correction value to the controller according to the transmission frequency, or sending an average value of process parameters collected in a data transmission period and the calculated control quantity correction value to the controller according to the transmission frequency.

Based on the above detailed analysis, the embodiments of the present invention also propose a controller.

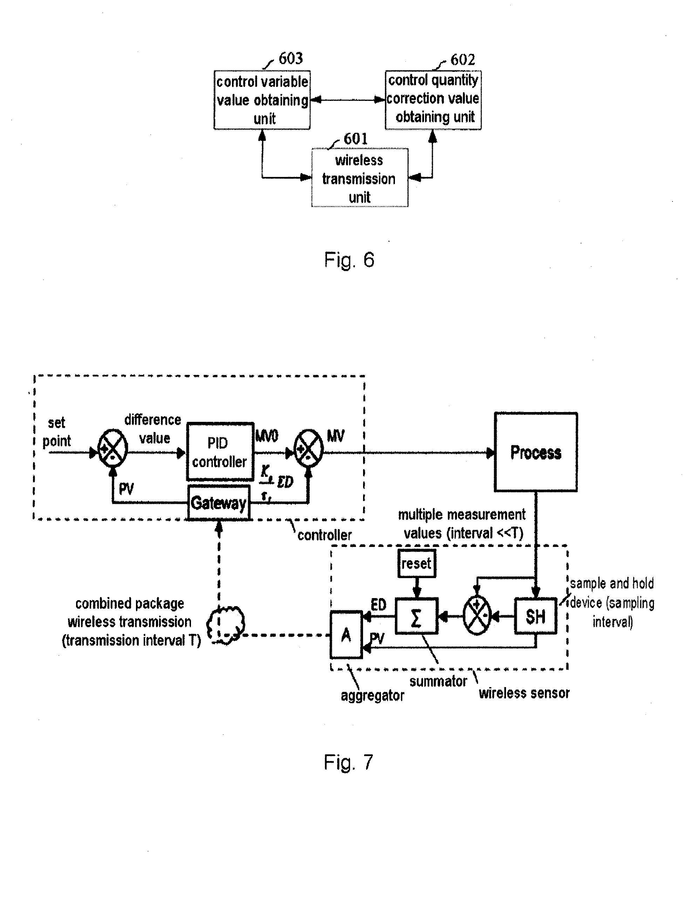

Fig. 6 is a structural diagram of a controller in an embodiment of the present invention.

As Fig. 6 shows, the controller comprises a wireless transmission unit 601, a control quantity correction value obtaining unit 602 and a control variable value obtaining unit 603, wherein:

the wireless transmission unit 601 is for obtaining process parameters of a production process that are collected by a wireless sensor according to a sampling frequency and sent according to a transmission frequency, wherein the sampling frequency is higher than the transmission frequency;

the control quantity correction value obtaining unit 602 is for obtaining a control quantity correction value according to process parameters collected by the wireless sensor in a data collection period;

the control variable value obtaining unit 603 is for calculating a control variable initial value according to process parameters sent by the wireless sensor, and obtaining a control variable value according to the control variable initial value and the control quantity correction value, and using the control variable value to control the production process.

In one embodiment, the control variable value obtaining unit 602 is for calculating the control variable initial value according to a process parameter collected by the wireless sensor at a transmission moment, or calculating the control variable initial value according to an average value of process parameters collected by the wireless sensor in a data transmission period.

In one embodiment, the control quantity correction value obtaining unit 602 is for subtracting a process parameter sent in the previous data transmission period from each process parameter collected by the wireless sensor in the data collection period, then summing the difference values to obtain the control quantity correction value.

Based on the above detailed analysis, those skilled in the art will realize that the embodiments of the present invention may be specifically implemented using a variety of logic components in a variety of ways. Embodiments of the present invention are described in detail below in conjunction with specific examples.

Fig. 7 is a detailed structural diagram of a process control system in an embodiment of the present invention.

As Fig. 7 shows, the system comprises two parts, namely a controller end and a wireless sensor end. The wireless sensor end collects process parameters of a production process according to a sampling frequency, and sends the collected process parameters to the controller end according to a transmission frequency, wherein the sampling frequency is higher than the transmission frequency. For example: assume that the sampling frequency is 2 seconds, and the transmission frequency is 20 seconds.

As can be seen from Fig. 7, the wireless sensor end comprises a sample and hold device, a comparator, a summator and an aggregator.

The workflow of the wireless sensor end is as follows:

At the moment t = 0, the sample and hold device collects a t = 0 process parameter of the production process, and sends the process parameter collected at the moment t = 0 to the comparator. In the comparator, a process parameter value stored in the sample and hold device (which value can be an average value of process parameters sent in the previous data transmission period, or a process parameter value collected at the previous data transmission moment) is subtracted from the t = 0 process parameter value, and the result is sent into the summator.

Similarly, at the moment t = 2 s, the sample and hold device again collects a t = 2 s process parameter of the production process, and sends the process parameter collected at the moment t = 2 s to the comparator. In the comparator, the process parameter value stored in the sample and hold device (which value is the same as the process parameter value stored in the sample and hold device at the moment t = 0, i.e. still the average value of process parameters sent in the previous data transmission period, or the process parameter value collected at the previous data transmission moment, because the period T thereof is assumed to be 20 s) is subtracted from the t = 2 s process parameter value, and the result is sent to the summator.

Similarly, the above operation is repeated at t = 4 s, 6 s, ..., 18 s.

At the moment t = 20 s, the sample and hold device collects a t = 20 s process parameter of the production process, and sends the process parameter collected at the moment t = 20 s to the comparator, at the same time sending the process parameter collected at the moment t = 20 s to the sample and hold device (SH) to be stored. In the comparator, the process parameter value stored in the sample and hold device at the moment t = 0 is subtracted from the t = 20 s process parameter value, and the result is sent to the summator.

A summation operation is performed in the summator, to obtain a control quantity correction value (ED). The aggregator forms the summator output (ED) and the process parameter value stored in the sample and hold device (which for example may be the process parameter collected at the moment t = 20 s, or the average process parameter value for the interval 0 - 20 s) into a package and sends this wirelessly to a gateway of the controller. Next, the summator is reset, so that ED = 0, the time is reset to t = 0, and the wireless sensor flow is repeated.

The controller end comprises a gateway, a first comparator, a PID controller and a second comparator; the gateway receives the control quantity correction value (ED) and process parameter sent by the wireless sensor end at intervals of 20 s. The process parameter is sent to the first comparator, for comparison with a preset set value (set point); the difference value is sent to the PID controller, to obtain a control variable initial value. Furthermore, the difference between the control variable initial value and a preset function of the control quantity correction value (ED) is found, to obtain a control variable value; the control variable value (MV) can be used to control the production process.

As an example:

$$ MV = \overline{MV} + K_c \left[ e(t) + \frac{1}{\tau_I} \left( \int_0^t e(t)dt - ED \right) \right]; $$

wherein $\overline{MV}$ is a control variable bias value; $K_c$ is a scale factor; $\tau_I$ is an integration constant; the two parameters $K_c$ and $\tau_I$ can be set by the user; e(t) is the difference between the set point and the process parameter; and t is time.

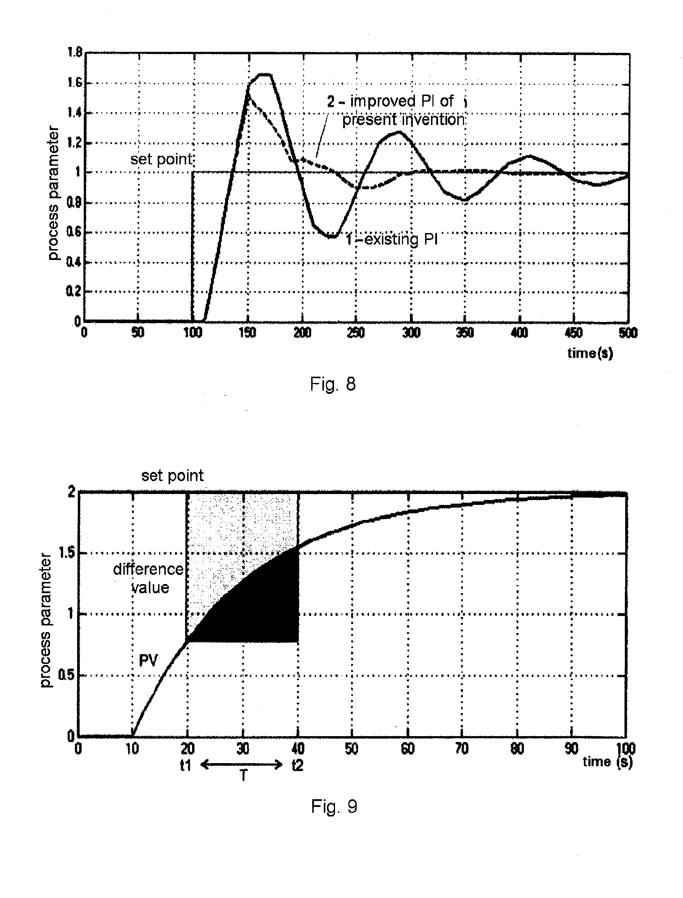

Fig. 8 is a schematic diagram comparing the control performances of an embodiment of the present invention with the prior art; Fig. 9 is a schematic diagram showing the improvement in control performance in an embodiment of the present invention.

As can be seen from Figs. 8 and 9, the control method in the embodiments of the present invention has a smaller overswing and a shorter transition time than in the prior art, so the control performance is improved significantly. In fact, the advantage of the embodiments of the present invention lies in the additional information of multiple measurement values provided between transmission periods. To a certain extent, the embodiments of the present invention compensate for information that is lost because the sampling interval is too long.

In the prior art, $MV = \overline{\overline{MV}} + K_c[e(t) + \frac{1}{\tau_I}\int_0^t e(t)dt]$. However, in the case of a wireless sensor with relatively long sampling and transmission intervals, this proportional-integral formula may introduce significant oscillation. For example, as Fig. 9 shows, between transmission moments t1 and t2, an existing PI controller assumes that the control variable and e(t) are fixed; the actual control variable is close to the set point. In the embodiments of the present invention, repeatedly calculated integral operations are corrected by subtracting ED in the next control period. By way of obtaining the actual difference value signal between the set point and the control variable, frequently obtained control variable measurement values make a contribution to improvement of control performance.

Embodiments of the present invention can be applied in a variety of specific field environments. For example, the system shown in Fig. 7 may be specifically applied in microalgal culture processing. In this case, the production process in Fig. 7 is a photobioreactor for microalgal culture. A wireless PH sensor communicates with a controller once every 300 seconds, and the wireless PH sensor gives an additional measurement value every 30 seconds. Every 300 seconds, all the measurement values are formed into a package and sent to the controller. The PH set point is 7.0, a value which is beneficial to microalgae. The controller may use a PI control algorithm, and may use a variety of existing control techniques, for example output restriction, etc. The control variable (MV) is the feeding speed at which carbon dioxide ($CO_2$) is inputted to the photobioreactor. Multiple PH measurement values are formed into a package as initial data and sent to the control system, and an ED is generated in the controller.

Optionally, the ED can also be generated in the wireless sensor, and the ED and control parameter can be sent together to the controller. Next, the controller extracts the ED value in the PI integral calculation.

The process control method proposed in the embodiments of the present invention can be stored on a variety of machine-readable storage media by an instruction or instruction set storage method. These storage media include but are not limited to: floppy disk, optical disk, DVD, hard disk, flash memory, USB flash drive, CF card, SD card, MMC card, SM card, memory stick, xD card, etc. Furthermore, the process control method proposed in the embodiments of the present invention may also be applied in flash memory (Nand flash) storage media, such as USB flash drive, CF card, SD card, SDHC card, MMC card, SM card, memory stick, xD card, etc.

The process control method proposed in the embodiments of the present invention may also be specifically implemented as computer instructions in a variety of forms. When these computer instructions are executed in a machine, they can make the machine execute the process control method proposed in the embodiments of the present invention.

In summary, the embodiments of the present invention comprise a wireless sensor and a controller, wherein: the wireless sensor is used for collecting process parameters of a production process according to a sampling frequency, obtaining a control quantity correction value according to process parameters collected in a data collection period, and sending the collected process parameters and the calculated control quantity correction value to the controller according to a transmission frequency, wherein the sampling frequency is higher than the transmission frequency; the controller is used for calculating a control variable initial value according to the process parameters sent and obtaining a variable value according to the control variable initial value and the control quantity correction value sent by the wireless sensor, and using the control variable value to control the production process. Clearly, when the embodiments of the present invention are applied, a good compromise is achieved between wireless sensor energy consumption and controller control performance; on the one hand, a slower transmission frequency can be used to reduce the wireless sensor energy consumption, and on the other hand, multiple measurement values collected between wireless sensor data transmission processes are fully utilized to improve the control performance of the controller.

The above embodiments are merely preferred embodiments of the present invention, which are not intended to limit it. Any amendments, equivalent substitutions and improvements etc. which are made within the spirit and principles of the present invention shall be included in the scope of protection thereof.

**Claims**

1. A process control system, **characterized by** comprising a wireless sensor and a controller, wherein:

   the wireless sensor is used for collecting process parameters of a production process according to a sampling frequency, obtaining a control quantity correction value according to process parameters collected in a data collection period, and sending the collected process parameters and the calculated control quantity correction value to the controller according to a transmission frequency, wherein the sampling frequency is higher than the transmission frequency;
   the controller is used for calculating a control variable initial value according to the process parameters sent by the wireless sensor, and obtaining a control variable value according to the control variable initial value and the control quantity correction value sent by the wireless sensor, and using the control variable value to control the production process.

2. The process control system as claimed in claim 1, **characterized in that** the wireless sensor is used for sending a process parameter collected at a transmission moment and the calculated control quantity correction value to the controller according to the transmission frequency, or sending an average value of process parameters collected in a data transmission period and the calculated control quantity correction value to the controller according to the transmission frequency.

3. The process control system as claimed in claim 1, **characterized in that** the wireless sensor is used for subtracting a process parameter sent in the previous data transmission period from each process parameter collected in the data collection period, then summing the difference values to obtain the control quantity correction value.

4. A process control system, **characterized by** comprising a wireless sensor and a controller, wherein:

the wireless sensor is used for collecting process parameters of a production process according to a sampling frequency, and sending the collected process parameters to the controller according to a transmission frequency, wherein the sampling frequency is higher than the transmission frequency;
the controller is used for obtaining a control quantity correction value according to process parameters collected by the wireless sensor in a data collection period, calculating a control variable initial value according to the process parameters sent by the wireless sensor, and obtaining a control variable value according to the control variable initial value and the control quantity correction value, and using the control variable value to control the production process.

5. The process control system as claimed in claim 4, **characterized in that**
the controller is used for calculating the control variable initial value according to a process parameter collected by the wireless sensor at a transmission moment, or calculating the control variable initial value according to an average value of process parameters collected by the wireless sensor in a data transmission period.

6. The process control system as claimed in claim 4, **characterized in that**
the controller is used for subtracting a process parameter sent in the previous data transmission period from each process parameter collected by the wireless sensor in the data collection period, then summing the difference values to obtain the control quantity correction value.

7. A process control method, **characterized by** comprising:

collecting process parameters of a production process according to a sampling frequency, obtaining a control quantity correction value according to process parameters collected in a data collection period, and sending the collected process parameters and the calculated control quantity correction value wirelessly according to a transmission frequency, wherein the sampling frequency is higher than the transmission frequency;
calculating a control variable initial value according to the wirelessly received process parameters, and obtaining a control variable value according to the control variable initial value and the wirelessly received control quantity correction value, and using the control variable value to control the production process.

8. The process control method as claimed in claim 7, **characterized in that** the step of sending the collected process parameters and the calculated control quantity correction value wirelessly according to a transmission frequency comprises:

sending a process parameter collected at a transmission moment and a calculated control quantity correction value wirelessly according to the transmission frequency; or sending an average value of process parameters collected in a data transmission period and the calculated control quantity correction value wirelessly according to the transmission frequency.

9. The process control method as claimed in claim 7, **characterized in that** the step of obtaining a control quantity correction value according to process parameters collected in a data collection period comprises:

subtracting a process parameter sent in the previous data transmission period from each process parameter collected in the data collection period, then summing the difference values to obtain the control quantity correction value.

10. A process control method, **characterized by** comprising:

collecting process parameters of a production process according to a sampling frequency, and sending the collected process parameters wirelessly according to a transmission frequency, wherein the sampling frequency is higher than the transmission frequency;

extracting, from the wirelessly received process parameters, process parameters which are included in a data collection period, using the process parameters which are included in the data collection period to obtain a control quantity correction value, calculating a control variable initial value according to the wirelessly received process parameters, and obtaining a control variable value according to the control variable initial value and the control quantity correction value, and using the control variable value to control the production process.

11. The process control method as claimed in claim 10, **characterized in that** the step of calculating a control variable initial value according to the wirelessly received process parameters comprises:

using a process parameter collected at a transmission moment to calculate the control variable initial value, or using an average value of process parameters collected in a data transmission period to calculate the control variable initial value.

12. The process control method as claimed in claim 10, **characterized in that** the step of using the process parameters which are included in the data collection period to obtain a control quantity correction value comprises:

subtracting a process parameter sent in the previous data transmission period from each process parameter collected in the data collection period, then summing the difference values to obtain the control quantity correction value.

13. A wireless sensor, **characterized by** comprising a process parameter collecting unit, a control quantity correction value obtaining unit and a wireless transmission unit, wherein:

the process parameter collecting unit is for collecting process parameters according to a sampling frequency;

the control quantity correction value obtaining unit is for obtaining a control quantity correction value according to process parameters collected in a data collection period;

the wireless transmission unit is for sending the collected process parameters and the calculated control quantity correction value to a controller according to a transmission frequency;

wherein the sampling frequency is higher than the transmission frequency.

14. The wireless sensor as claimed in claim 13, **characterized in that** the control quantity correction value obtaining unit comprises a comparator, a summator and an aggregator.

15. The wireless sensor as claimed in claim 13, **characterized in that**
the wireless transmission unit is for sending a process parameter collected at a transmission moment and the calculated control quantity correction value to the controller according to the transmission frequency, or sending an average value of process parameters collected in a data transmission period and the calculated control quantity correction value to the controller according to the transmission frequency.

16. The wireless sensor as claimed in claim 13, **characterized in that**
the control quantity correction value obtaining unit is for subtracting a process parameter sent in the previous data transmission period from each process parameter collected in the data collection period, then summing the difference values to obtain the control quantity correction value.

17. A controller, **characterized by** comprising a wireless transmission unit, a control quantity correction value obtaining unit and a control variable value obtaining unit, wherein:

the wireless transmission unit is for obtaining process parameters of a production process that are collected by a wireless sensor according to a sampling frequency and sent according to a transmission frequency, wherein the sampling frequency is higher than the transmission frequency;

the control quantity correction value obtaining unit is for obtaining a control quantity correction value according to process parameters collected by the wireless sensor in a data collection period;

the control variable value obtaining unit is for calculating a control variable initial value according to process parameters sent by the wireless sensor, and obtaining a control variable value according to the control variable initial value and the control quantity correction value, and using the control variable value to control the production process.

18. The controller as claimed in claim 17, **characterized in that**

the control variable value obtaining unit is for calculating the control variable initial value according to a process parameter collected by the wireless sensor at a transmission moment, or calculating the control variable initial value according to an average value of process parameters collected by the wireless sensor in a data transmission period.

19. The controller as claimed in claim 17, **characterized in that**

the control quantity correction value obtaining unit is for subtracting a process parameter sent in the previous data transmission period from each process parameter collected by the wireless sensor in the data collection period, then summing the difference values to obtain the control quantity correction value.

20. A machine-readable storage medium, which stores instructions for making a machine execute the method as claimed in any one of claims 7 - 12.

21. A computer program, which makes a machine execute the method as claimed in any one of claims 7 - 12 when the computer program is run in the machine.

Fig. 1

Fig. 2

**301**

Collecting process parameters of a production process according to a sampling frequency, obtaining a control quantity correction value according to process parameters collected in a data collection period, and sending the collected process parameters and the calculated control quantity correction value wirelessly according to a transmission frequency, wherein the sampling frequency is higher than the transmission frequency

**302**

Calculating a control variable initial value according to the wirelessly received process parameters, and obtaining a control variable value according to the control variable initial value and the wirelessly received control quantity correction value, and using the control variable value to control the production process

Fig. 3

401

Collecting process parameters of a production
process according to a sampling frequency,
and sending the collected process parameters
wirelessly according to a transmission frequency,
wherein the sampling frequency is higher
than the transmission frequency

402

Extracting, from the wirelessly received process
parameters, process parameters which are
included in a data collection period, using the
process parameters which are included in the data
collection period to obtain a control quantity
correction value, calculating a control variable initial
value according to the wirelessly received process
parameters, and obtaining a control variable value
according to the control variable initial value and
the control quantity correction value, and using the
control variable value to control the production process

Fig. 4

501

process parameter
collecting unit

502

control quantity
correction value
obtaining unit

503

wireless
transmission
unit

Fig. 5

Fig. 6

Fig. 7

Fig. 8

Fig. 9

## INTERNATIONAL SEARCH REPORT

| | International application No. |
|---|---|
| | PCT/CN2013/071220 |

**A. CLASSIFICATION OF SUBJECT MATTER**

G05B 11/36 (2006.01) i

According to International Patent Classification (IPC) or to both national classification and IPC

**B. FIELDS SEARCHED**

Minimum documentation searched (classification system followed by classification symbols)

IPC: G05B; G08C

Documentation searched other than minimum documentation to the extent that such documents are included in the fields searched

Electronic data base consulted during the international search (name of data base and, where practicable, search terms used)

CNKI, CNPAT, WPI , EPODOC: CONTROL+, PROCESS W CONTROL+, SENSOR, WIRELESS, MODIFICAT+, CORRECT+, AMEND+, SUM+, PARAMETER, VARIABLE, COMPAR+, siemens, fan shunjie, meng xiantao, hu yongqiang, measured value, subtract, energy consumption

**C. DOCUMENTS CONSIDERED TO BE RELEVANT**

| Category* | Citation of document, with indication, where appropriate, of the relevant passages | Relevant to claim No. |
|---|---|---|
| Y | CN 102081397 A (FISHER-ROSEMOUNT SYSTEM INC.) 01 June 2011 (01.06.2011) description, paragraphs [0043] to [0072] and figure 1 | 1-21 |
| Y | CN 1036085 A (TOSHIBA CO., LTD) 04 October 1989 (04.10.1989) description, page 1, the second line from the bottom to page 2, line 15 | 1-21 |
| A | CN 102186309 A (ANSHAN ZHENGFA CIRCUIT CO., LTD.) 14 September 2011 (14.09.2011) the whole document | 1-21 |
| A | CN 101078924 A (JINAN SIGMAR TECHNOLOGY CO., LTD.) 28 November 2007 (28.11.2007) the whole document | 1-21 |

☐ Further documents are listed in the continuation of Box C.    ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 17 October 2013 (17.10.2013) | 17 November 2013 (17.11.2013) |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | SHU, Qi Telephone No. (86-10) 62414048 |

Form PCT/ISA /210 (second sheet) (July 2009)

## INTERNATIONAL SEARCH REPORT
Information on patent family members

International application No.

PCT/CN2013/071220

| Patent Documents referred in the Report | Publication Date | Patent Family | Publication Date |
|---|---|---|---|
| CN 102081397 A | 01.06.2011 | DE 102006050374 A1 | 26.04.2007 |
| | | US 2007093918 A1 | 26.04.2007 |
| | | GB 2431752 A | 02.05.2007 |
| | | GB 2431736 A | 02.05.2007 |
| | | CN 1955867 A | 02.05.2007 |
| | | US 2007112905 A1 | 17.05.2007 |
| | | JP 2007122726 A | 17.05.2007 |
| | | CN 1967418 A | 23.05.2007 |
| | | JP 2007149073 A | 14.06.2007 |
| | | US 2008082180 A1 | 03.04.2008 |
| | | US 2009299495 A1 | 03.12.2009 |
| | | JP 2010015608 A | 21.01.2010 |
| | | CN 101963809 A | 02.02.2011 |
| | | PH 1200600450 B1 | 20.09.2010 |
| | | GB 2475629 A | 25.05.2011 |
| | | HK 1100095 A1 | 21.04.2011 |
| | | PH 1200600476 B1 | 29.06.2010 |
| | | HK 1156404 A1 | 12.10.2012 |
| | | PH 1201000168 A | 16.07.2012 |
| | | DE 102006049832 A1 | 31.05.2007 |
| | | HK 1106590 A1 | 25.11.2011 |
| CN 1036085 A | 04.10.1989 | EP 0333477 A2 | 20.09.1989 |
| | | JPH 01239603 A | 25.09.1989 |
| | | AU 3121089 A | 23.11.1989 |
| | | US 5029066 A | 02.07.1991 |
| | | KR 920004079 B1 | 23.05.1992 |
| | | DE 68919248 T2 | 23.03.1995 |
| CN 102186309 A | 14.09.2011 | None | |
| CN 101078924 A | 28.11.2007 | None | |

Form PCT/ISA /210 (patent family annex) (July 2009)